# EUROPÄISCHE PATENTANMELDUNG

(11) **EP 1 307 012 A2**
(43) Veröffentlichungstag der Anmeldung: **02.05.2003**
(21) Anmeldenummer: 02023982.8
(22) Anmeldetag: 25.10.2002
(51) Int. Cl.: H04L 12/56, H04L 12/66

(54) **Telekommunikationsanordnung und Verfahren zur Steuerung von Leitungen und Paketvermittlungen**

(30) Priorität: 26.10.2001 DE 10152895; 27.11.2001 DE 10157974
(71) Anmelder: Tenovis GmbH & Co. KG, 60326 Frankfurt (DE)
(72) Erfinder: Bien, Mathias, 63737 Jossgrund (DE); Mangold, Ernst, 61231 Bad Nauheim (DE); Eichhorn, Thomas, 61250 Usingen (DE); Sölch, Björn, 60487 Frankfurt (DE); Lenz, Oliver, 63579 Freigericht (DE); Wagner, Joachim, 35625 Hüttenberg (DE); Eli, Bernhard, 65428 Rüsselsheim (DE)
(74) Vertreter: Heinze, Ekkehard, Dipl.-Phys. Dr.

(57) **Zusammenfassung**

Verfahren zur Steuerung von leitungs- und paketvermittelten Verbindungen zwischen herkömmlichen Telekommunikations-Endgeräten und IP-Endgeräten oder IP-Endgeräten untereinander in einem Telekommunikationsnetz, wobei die Bearbeitung der Signalisierung und Gewinnung von Steuerinformation zur Nutzdatenbearbeitung einheitlich durch eine einzelne Steuerung bei einer Leitungsvermittlungseinrichtung erfolgt.

## Beschreibung

Die Erfindung betrifft ein Verfahren zur Steuerung von leitungs- und paketvermittelten Verbindungen nach dem Oberbegriff des Anspruchs 1 sowie eine entsprechende Telekommunikationsanordnung.

In den nachfolgenden Ausführungen werden die nachfolgend erläuterten Abkürzungen bzw. englischsprachigen Kurzbezeichnungen verwendet:
CS: Circuit Switched (leitungsvermittelt)
IP: Internet Protocol (auch allgemein verwendet für das Internet/Intranet)
RTP: Real Time Protocol (Transferprotokoll über IP für zeitkritische Daten wie Sprachdaten)
CS Media: CS media stream (leitungsvermittelte Nutz-/Sprachdaten), werden über einen ISDN B-Kanal (64 kbit/s) geführt.
CS Signalling: Signalisierungsdaten für leitungsvermittelte Verbindungen, werden über einen ISDN D-Kanal geführt. Signalisierungsdaten sind typischerweise Protokollnachrichten z.B. von DSS1, QSIG oder proprietären Protokollen.
IP Media: im IP Netz paketvermittelte Nutz-/Sprachdaten, werden als "RTP media stream" über IP Verbindungen geführt.
IP Signalling: Signalisierungsdaten für im IP Netz paketvermittelte Verbindungen, werden über IP Verbindungen geführt. Signalisierungsdaten sind typischerweise Protokollnachrichten von "Voice over IP" Protokollen wie H.323 und SIP, die über TCP/IP Basisprotokolle ausgetauscht werden.
Call Control: Bearbeitet die Signalisierung und leitet davon Steuerinformationen (Control) für die Nutzdaten -(Media) Bearbeitung ab.

In der modernen Telekommunikationstechnik unterscheidet man grundsätzlich die seit langem bekannten leitungsvermittelten Verbindungen, bei denen die Nutzdaten über einen fest reservierten Kanal übertragen werden, von paketvermittelten Verbindungen, bei denen - vereinfacht gesagt - Datenpakete über für eine Vielzahl von Verbindungen genutzte Kanäle übertragen werden. Nachdem der wesentlich höhere Adressierungs- und Kodierungsaufwand paketvermittelter Verbindungen aufgrund der dramatischen Fortschritte in der Hard- und Softwarebasis zu vernünftigen Kosten realisierbar geworden ist, setzt sich das Prinzip der Paketvermittlung immer mehr durch. Es ermöglicht insbesondere die schnelle und kostengünstige Übertragung großer Datenmengen (Bild- und/oder Sprachdaten, einschließlich Videos, Konferenzschaltungen etc.) über IP-Netze zu Kosten, die auch für Privatanwender akzeptabel sind.

Die Koexistenz beider Prinzipien in miteinander verknüpften TK- und IP-Netzen erfordert jedoch vielfältige Anpassungen sowohl auf der Endgeräteseite wie auch bei den Vermittlungsstellen, um eine reibungslose Übertragung auch über die Schnittstellen zwischen den Systemen hinweg zu ermöglichen.

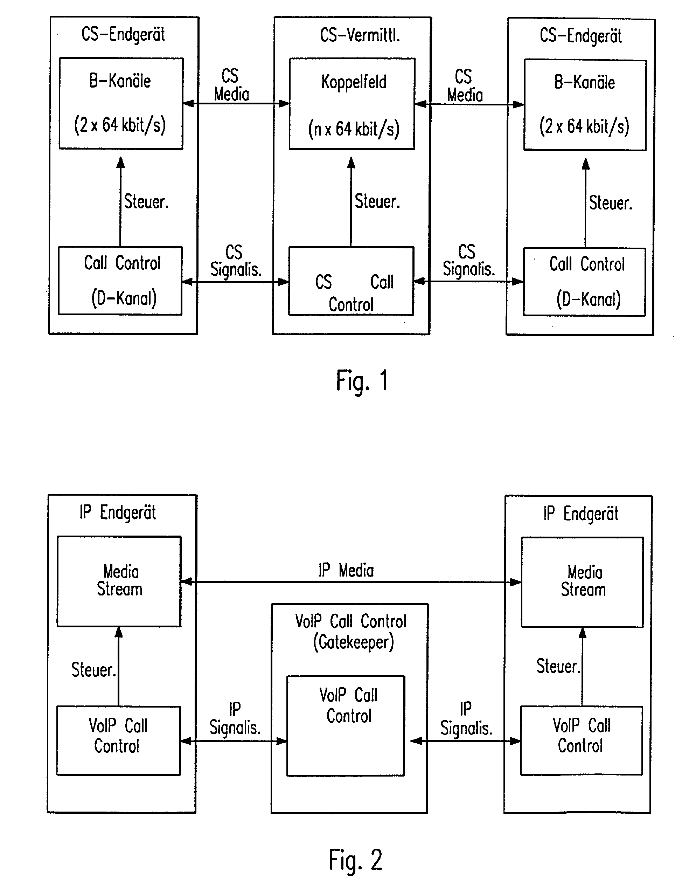

In den Figuren 1 bis 4 sind herkömmliche Telekommunikationsanordnungen und deren Betriebsweise in Form von Prinzipskizzen dargestellt.

Fig. 1 zeigt zwei CS-Endgeräte, die über eine leitungsvermittelte Vermittlungseinrichtung CS-Vermittlungseinrichtung verbunden sind. Der Signalisierungsaustausch zwischen den "Call Control"-Funktionen der Endgeräte und der Vermittlungseinrichtung (CS-Signalisierung) erfolgt über die D-Kanäle, die davon abgeleitete Steuerung steuert die beteiligten B-Kanäle. Dies geschieht in der Vermittlungseinrichtung mit Hilfe eines Koppelfeldes, in den Endgeräten über die Ansteuerung der zwei vorhandenen ISDN-B-Kanäle.

Fig. 2 zeigt zwei IP-Endgeräte, die über eine paketvermitteltes Netz (IP-Netz) verbunden sind. Der Signalisierungsaustausch zwischen den "VoIP Call Control"-Funktionen der Endgeräte und einer zentralen VolP Call Control (IP-Signalisierung) erfolgt über VoIP-Protokolle, die davon abgeleitete Steuerung steuert die beteiligten IP-Mediaströme. Dies geschieht durch die signalisierungsmäßige Aushandlung der Mediastrom-Ein- und Ausgänge der Endgeräte ("RTP-Ports"). Die IP-Mediaströme fließen dann direkt zwischen den IP-Endgeräten.

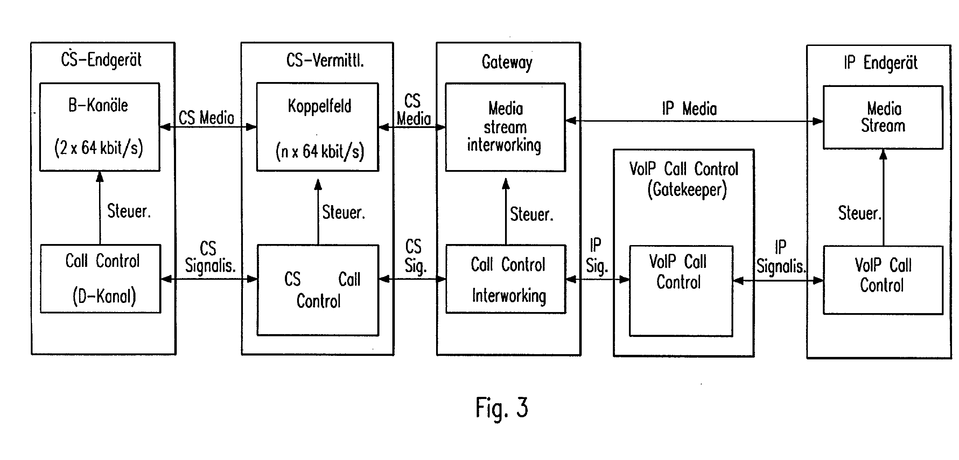

Fig. 3 zeigt die Kombination der Verhältnisse von Fig. 1 (links) mit Fig. 2 (rechts), wobei ein Gateway in der Mitte die Anpassung (Interworking) übernimmt. Dieses Gateway "spielt" zur IP-Seite hin (nach rechts) die Rolle eines IP-Endgerätes, zur anderen Seite die Rolle eines CS-Endgerätes. Im Gateway selbst werden dann beide "Rollen" quasi "Rücken an Rücken" umgesetzt. Diese Umsetzung erfolgt für die Signalisierung (Call Control Interworking) und die IP/CS-Mediaströme (Media stream interworking) getrennt.

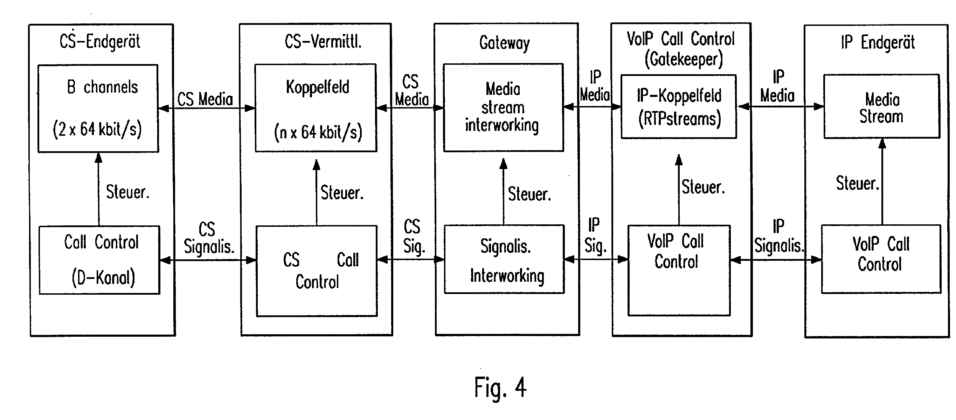

Nach Einführung einer zentralen Mediastream-Behandlung ("Koppelfeid") auf der IP-Seite ergibt sich die Situation, wie sie in Fig. 4 dargestellt ist:

Fig. 4 zeigt die gleiche Grundkonfiguration wie Fig. 3, auf der IP-Seite ist jedoch ein zentrales "VoIP-Koppelfeld" IP-Koppelfeld) vorgesehen. Die IP-Mediaströme werden nicht mehr direkt zwischen den IP-Endgeräten geführt, sondern - wie bei CS-Konfigurationen - über eine zentrale Stelle. Dies erlaubt zusätzliche Funktionen, wie das Einblenden von Ansagen und Tönen, das Aufschalten auf Konferenzen etc., die dezentral in den Terminals nicht bereitgestellt werden können. Realisiert wird ein solches VoIP-Koppelfeld dadurch, daß den Endgeräten bzw. dem Gateway signalisierungsmäßig nicht mehr die Mediastrom-Ein- und -Ausgänge des "Gegenüber", sondern die Ein- und Ausgänge des zentralen VoIP-Koppelfeldes angegeben werden. Die Steuerung sorgt dann dafür, daß diese "halben" Verbindungen passend vom VolP-Koppelfeld miteinander verbunden werden.

Die herkömmlichen Anordnungen und Betriebsweisen haben im Hinblick auf die Bereitstellung erweiterter Funktionen und zusätzlicher Dienste bestimmte Grenzen. Insbesondere lassen sich übergreifende Leistungsmerkmale (d. h. Funktionen, die sowohl leitungsvermittelte Verbindungen als auch IP-Mediaverbindungen beeinflussen) mit diesen Anordnungen zur schwer implementieren. Für IP-Endgeräte sind auf diese Weise zudem nicht sämtliche Leistungsmerkmale der leitungsvermittelten Architekturen verfügbar zu machen.

Der Erfindung liegt daher die Aufgabe der Bereitstellung eines verbesserten Verfahrens zum Betrieb von verknüpft leitungs- und paketvermittelt arbeitenden Telekommunikationsnetzen sowie einer entsprechenden Anordnung zugrunde, welche in vereinfachter Weise die Bereitstellung einer großen Vielzahl an Leistungsmerkmalen erlauben.

Diese Aufgabe wird in ihrem Verfahrensaspekt durch ein Verfahren mit den Merkmalen des Anspruchs 1 und in ihrem Vorrichtungsaspekt durch eine Telekommunikationsanordnung mit den Merkmalen des Anspruchs 4 gelöst. Zweckmäßige Fortbildungen ergeben sich aus den abhängigen Ansprüchen.

Durch Steuerung sowohl der leitungsvermittelten als auch der VolP -Verbindungen durch eine einzige Call Control werden übergreifende Leistungsmerkmale optimal implementierbar.

Durch Adaption der im leitungsvermittelten Teil verwendeten Steuerinformationen zur Steuerung des Koppelfelds an eine entsprechende Steuerung des virtuellen IP-Koppelfeldes wird es möglich, sowohl die Circuit Switched-Kanäle als auch die IPbasierten Mediaströme durch eine zentrale Call Control (auf der Circuit Switched-Seite) zu steuern. Dabei werden nicht nur die Zusammenschaltung von 64 kbit/s Kanälen und IP-Mediaströmen, sondern auch die Anschaltung von Tönen und Hinweisansagen sowie Konferenzmischer und Umschaltungen für Leistungsmerkmale gesteuert. Auch IP-interne Verbindungen, d. h. Verbindungen zweier IP-Endgeräte untereinander, werden über die schaltvermittlungs-basierte Call Control gesteuert.

Die Steuerung (Call Control) von Seiten der Leitungsvermittlungseinrichtung stört insbesondere die Zusammenschaltung von in Leitungsvermittlung betriebenen Kanälen - bei einem ISDN-Netz 64-kbit/s-Kanälen - und IP-Mediaströmen (Sprach- und/oder Bilddaten). In zweckmäßiger Weise realisiert sie übergreifende Leistungsmerkmale sowie Leistungsmerkmale, wie sie derzeit für leitungsvermittelte Verbindungen (nicht aber für paketvermittelte Verbindungen) verfügbar sind.

Die in der vorgeschlagenen Anordnung vorgesehene Steuerungs-IWU (Control Interworking Unit) ist insbesondere Teil eines Gateway zur Verbindung des VoIP-Koppelfeldes mit einer Leitungsvermittlungseinrichtung. ist, in der die Leitungsvermittlungs-Steuerung angeordnet ist.

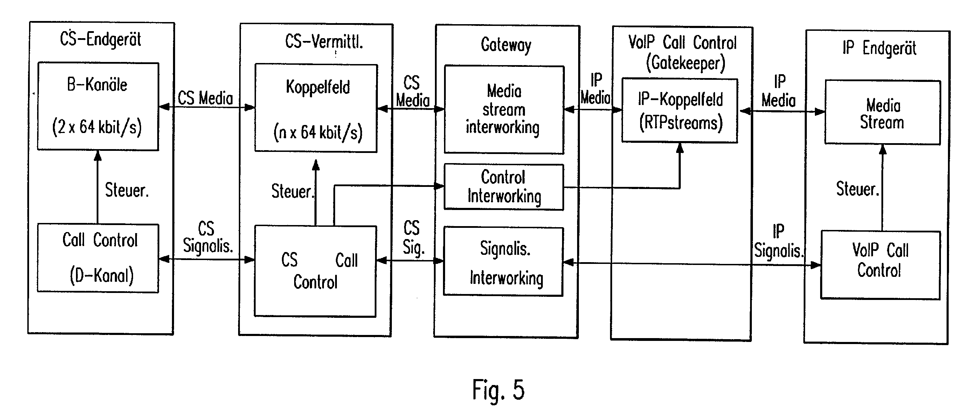

Fig. 5 zeigt in einer Prinzipskizze eine bevorzugte Ausführungsform der Erfindung.

In Fig. 5 wird das zentrale VoIP-Koppelfeld nicht mehr von einer IP Call Control, sondern über ein "Control Interworking" von der Vermittlungssteuerung der leitungsvermittelten Seite (CS Call Control) mitgesteuert. Funktionen, die Auswirkungen auf IP- und CS-Seite haben (übergreifende Lesitungsmerkmale), können dabei optimal koordiniert werden. Bedingt durch die i.d.R. viel umfangreichere Funktionsvielfalt der CS Call Control können zudem Funktionen auf der IP-Seite ausgeführt werden, die von einer IP Call Control (noch) nicht geboten werden.

Die Ausführung der Erfindung ist nicht auf das oben beschriebene Beispiel beschränkt, sondern ebenso in einer Vielzahl von Abwandlungen möglich, die im Rahmen fachgemäßen Handelns liegen.

## Patentansprüche

1. Verfahren zur Steuerung von leitungs- und paketvermittelten Verbindungen zwischen herkömmlichen Telekommunikations-Endgeräten und IP-Endgeräten oder IP-Endgeräten untereinander in einem Telekommunikationsnetz,
**dadurch gekennzeichnet, daß**
die Bearbeitung der Signalisierung und Gewinnung von Steuerinformation zur Nutzdatenbearbeitung einheitlich durch eine einzelne Steuerung bei einer Leitungsvermittlungseinrichtung erfolgt.

2. Verfahren nach Anspruch 1,
**dadurch gekennzeichnet, daß**
die einzelne Steuerung die Zusammenschaltung von in Leitungsvermittlung betriebenen Kanälen, insbesondere 64-kbit/s-Kanälen, und IP-Mediaströmen steuert.

3. Verfahren nach Anspruch 1 oder 2,
**dadurch gekennzeichnet, daß**
die einzelne Steuerung übergreifende Leistungsmerkmale sowie Leistungsmerkmale leitungsvermittelter Verbindungen für die verbundenen Endgeräte realisiert.

4. Telekommunikationsanordnung, insbesondere zur Durchführung des Verfahrens nach einem der vorangehenden Ansprüche, zur Verbindung eines herkömmlichen Telekommunikations-Endgerätes mit einem IP-Endgerät oder zweiter IP-Endgeräte untereinander,
**dadurch gekennzeichnet, daß**
eine Leitungsvermittlungs-Steuerung über eine Control Interworking Unit eine Steuersignalverbindung zu einem einem IP-Endgerät zugeordneten VoIP-Koppelfeld hat, um dieses extern zu steuern.

5. Telekommunikationsanordnung nach Anspruch 4,
**dadurch gekennzeichnet, daß**
die Control Interworking Unit Teil eines Gateway zur Verbindung des VoIP-Koppelfeldes mit einer Leitungsvermittlungseinrichtung ist, in der die Leitungsvermittlungs-Steuerung angeordnet ist.
